# EUROPÄISCHE PATENTSCHRIFT

(11) **EP 2 286 091 B1**
(45) Veröffentlichungstag und Bekanntmachung des Hinweises auf die Patenterteilung: **12.10.2016**
(21) Anmeldenummer: 09761386.3
(22) Anmeldetag: 23.05.2009
(51) Int. Cl.: F15B 21/04

(54) **FLUIDKÜHLVORRICHTUNG**
FLUID COOLING DEVICE
DISPOSITIF DE REFROIDISSEMENT DE FLUIDE

(30) Priorität: 10.06.2008 DE 102008027424
(43) Veröffentlichungstag der Anmeldung: 23.02.2011
(73) Patentinhaber: Hydac AG, 6312 Steinhausen (CH)
(72) Erfinder: LAUER, Viktor, Josef, 66809 Nalbach (DE); ZEOLLA, Giuseppe, CH-6648 Minusio (CH)
(74) Vertreter: Bartels, Martin Erich Arthur
(86) Internationale Anmeldenummer: PCT/EP2009/003667
(87) Internationale Veröffentlichungsnummer: WO 2009/149823

(56) Entgegenhaltungen:
- WO-A-2005/093357
- DE-A1- 4 206 420
- DE-A1- 10 009 864
- DE-A1- 10 328 177
- DE-A1-102006 036 231
- DE-C1- 19 917 031
- RANDALL W, WHITESIDES P.E.: 'Practical Considerations in Pump Suction Arrangements', [Online] 15 August 2003, PDH center Gefunden im Internet: <URL:http://www.pdhonline.org/courses/m134/ m134content.pdf> [gefunden am 2012-05-03]

## Beschreibung

Die Erfindung betrifft eine Fluidkühlvorrichtung mit mindestens einer Wärmetauschereinrichtung zur Kühlung mindestens eines Fluids und mit mindestens einer Filtereinrichtung zum Filtern des Fluids, das an einen Verbraucher weiterleitbar ist und mit einem Filtergehäuse, wobei die Vorrichtung eine Nachsaugeinrichtung mit einem Nachsaugventil aufweist, die im Bedarfsfall fehlendes Fluid an die Saugseite des Verbrauchers weiterleitet, wobei die Filtereinrichtung mindestens ein Filterelement aufweist, das eine Rücklaufmenge an Fluid von der Wärmetauschereinrichtung kommend gefiltert an den Verbraucher weiterleitet und dass ein Vorspannventil der Nachsaugeinrichtung sicherstellt, dass die vom Verbraucher benötigte Fluidmenge, vorzugsweise als gefilterte Rücklaufmenge, voll zur Verfügung steht, gemäß der Merkmalsausgestaltung des Oberbegriffs des Patentanspruchs 1.

Dahingehende Kühlvorrichtungen sind für eine Vielzahl von Anwendungsfällen einsetzbar und in verschiedenen Ausführungsformen auf dem Markt frei erhältlich. So zeigt beispielsweise die DE 100 09 864 A1 eine Kühlvorrichtung mit einer von einem zu kühlenden Fluid, insbesondere Hydrauliköl, durchströmbaren Kühleinheit als Wärmetauschereinrichtung und mit einer Filtereinheit als Filtereinrichtung für das Filtern des Fluids, wobei die Filtereinheit zusammen mit der Kühleinheit in einem gemeinsamen Vorrichtungsgehäuse angeordnet ist. Hierdurch ist gegenüber den sonst bekannten Fluidkühlvorrichtungen der mehrteilige Aufbau vermieden, so dass die beschriebene Lösung bei gleicher Leistung erheblich kompakter und leichter aufbauen kann. Durch die Integration von Kühleinheit und Filtereinheit in einem Vorrichtungsgehäuse kann darüber hinaus die übliche Verrohrung entfallen und Fehlerquellen sind derart ausgeschlossen.

Bevorzugt ist bei der bekannten Lösung die Kühleinheit als plattenförmiger Lamellenkühler ausgebildet. Insbesondere bei flach gehaltenen Einbauräumen ist die dahingehende Plattenausgestaltung vorteilhaft und durch die wahlweise Anordnung der Filtereinheit im rechten oder linken Wasserkasten der Kühleinheit ist es möglich, die Reihenfolge von Kühleinheit und Filtereinheit miteinander zu vertauschen, was eine weitgehende Anpassung der Kühlvorrichtung an die Einbauverhältnisse vor Ort erlaubt. Das Vorrichtungsgehäuse ist entweder aus Blechteilen zusammengesetzt, bevorzugt ist jedoch die Ausgestaltung als Gußteil, insbesondere als Aluminium-Druckgußteil vorgesehen. Trotz der kompakten Bauweise baut die bekannte Lösung schwer auf und der konstruktive Aufbau ist relativ kompliziert, was die Herstellkosten erhöht.

Ferner offenbart die DE 103 28 177 A1 eine Fluidkühlvorrichtung als modulare Baueinheit mit einem Antriebsmotor, der ein in einem Lüftergehäuse drehbares Lüfterrad sowie mindestens eine Fluidpumpe antreibt, mittels der mindestens ein Fluid aus einem Vorratstank in einen hydraulischen Arbeitskreis mit einem Verbraucher förderbar ist, der im Betrieb das Fluid grundsätzlich erwärmt, sowie zu einem zugeordneten Wärmetauscher führt, aus dem das Fluid gekühlt in den Vorratstank zurückkehrt, wobei Teile des Vorratstanks zumindest teilweise das Lüfterrad umfassen und dergestalt das Lüftergehäuse bilden, das vorzugsweise aus einem Kunststoffmaterial in Leichtbauweise besteht.

Die bekannten Lösungen weisen trotz ihrer kompakten Bauweise gute Kühl- und Filtrationsergebnisse für das Fluid auf; allein sie können dort ihre Grenzen finden, wo der Verbraucher Teil eines sog. offenen Fluidkreislaufs ist, beispielsweise in Form einer Arbeitshydraulik oder als geschlossener, hydrostatischer Antrieb, beispielsweise in Form eines Fahrantriebes, ausgelegt ist. Bei dahingehenden Einsatzfällen ist für einen störungsfreien Betrieb des Verbrauchers regelmäßig sicherzustellen, dass eine dem Verbraucher vorgeschaltete Speisepumpe die von ihr benötigte Fluidmenge für den Verbraucher auch vollumfänglich erhält.

Bei den ansonsten bekannten Systemen, wie sie insbesondere in der Fahrzeugtechnik (Baumaschinen) eingesetzt werden und bei denen teilweise die Baukomponenten der Fluidkühlvorrichtung, wie Wärmetauschereinrichtung, Filtereinrichtung etc., räumlich voneinander getrennt an weit auseinanderliegenden Stellen des Fahrzeuges liegen können, hat es sich auch gezeigt, dass insbesondere bei Nachsaugvorgängen der Speisepumpe zur Sicherstellung der Versorgung des Verbrauchers aufgrund der damit einhergehenden langen Versorgungswegstrecken ein hoher Nachsaugdruck zur Verfügung gestellt werden muß. Dies hat den Nachteil, dass das im Fluid gebundene Gas (Luft), das teilweise 10 % und mehr des Fluidvolumens ausmachen kann, aufgrund des hohen Nachsaugdruckes ungewollt austritt, was dann zu einer "weichen" Fluid- oder Ölsäule führt und eine gleichmäßige Versorgung der Speisepumpe mit Fluid beeinträchtigt, was wiederum zu gravierenden Störungen beim hydraulischen Verbraucher führen kann, und im übrigen hat es sich gezeigt, dass der dahingehende Effekt auch zu materialschädigenden Kavitationserscheinungen, zumindest bei der Speisepumpe, führt.

Durch die WO 2005/093357 A ist eine gattungsgemäße Fluidkühlvorrichtung bekannt mit einer von einem zu kühlenden Fluid, insbesondere Hydrauliköl durchströmbaren Kühleinheit, die ein Vorrichtungsgehäuse aufweist und mit mindestens einer Filtereinheit für die Filtration des Fluids. Dadurch dass bei der bekannten Lösung das Vorrichtungsgehäuse der Kühleinheit mindestens einen auskragenden Tragarm aufweist, über den die jeweilige Filtereinheit fluidführend mit der Kühleinheit verbunden ist, ist die Filtereinheit mit dem Filterelement außerhalb des eigentlichen Vorrichtungsgehäuses der Kühleinheit angeordnet und dennoch integrativ über den Tragarm mit derselben verbunden, was das Auswechseln der verbrauchten Filterelemente gegen Neuelemente erleichtert.

Bei einer bevorzugten Ausführungsform der bekannten Kühlvorrichtung sind die beiden Längsseiten der Kühleinheit aus zwei Längsholmen gebildet, wobei in einem Längsholm mindestens ein Nachsaug- und Rückschlagventil integriert ist und in dem anderen ein Thermo-Bypassventil. In der praktischen Ausgestaltung ist auf der Unterseite eines Sammelrohres das kombinierte Nachsaug- und Rückschlagventil angeordnet, das federbelastet als Rückschlagventil in der einen Richtung die Fluidführung zum Tank zulässt und dergestalt eine Absicherung gegen Überdruck bildet, und in der anderen Fluidrichtung besteht durch das Nachsaugventil die Möglichkeit, das Fluid vom Tank kommend in das Sammelrohr nachströmen zu lassen. Das genannte Thermo-Bypassventil dient dazu, bei niedrigen Fluidtemperaturen direkt die Fluidzuführung unter Umgehung der Kühleinheit zur Filtereinheit der Vorrichtung zu ermöglichen. Obwohl die bekannte Fluidkühlvorrichtung sehr kompakt aufbauend ist, entsteht aufgrund relativ langer Versorgungswegstrecken wiederum der Bedarf an einem hohen Nachsaugdruck, der insoweit zwingend zur Verfügung gestellt werden muss, was wiederum den Nachteil hat, dass wie bereits beschrieben das im Fluid gebundene Gas (Luft) aufgrund des hohen Nachsaugdruckes ungewollt austritt, was dann zu einer "weichen" Fluid- oder Ölsäule führt mit der Folge, dass im hydraulischen Kreis materialschädigende Kavitationserscheinungen auftreten können.

Aus der DE 42 06 420 A1 geht ein Filter hervor, bei dem neben einem ersten Rückschlagventil ein zweites Rückschlagventil derart parallel geschaltet ist, dass es sich bei Druckabfall bzw. auftretenden Kavitationen in einer Bypassleitung und/oder Saugseite einer Speisepumpe öffnet und die Speisepumpe Druckmittel aus einem Flüssigkeitsbehälter ansaugen kann.

Aus DE 10 2006 036 231 A1 ist eine Filtereinrichtung bekannt, bei der innerhalb eines Filtergehäuses Filterelemente in konzentrischer Hintereinanderanordnung bezogen auf die Längsachse des Filtergehäuses als Teil der Filtereinrichtung in dem Filtergehäuse aufgenommen sind, das ein Bypassventil aufnimmt. Den unteren Gehäuseabschluss bildet ein Bodendeckel, an dem sich ein in Schließstellung vorgespanntes Druckhalteventil befindet. Aus DE 199 17 031 C1 ist eine Filtervorrichtung bekannt, bei der zu einem von mehreren Nutzanschlüssen eine Verbindungsleitung führt, in der ein weiteres Filterelement in Form eines Schutzsiebes angeordnet ist.

Ausgehend von diesem Stand der Technik liegt der Erfindung daher die Aufgabe zugrunde, die eingangs erwähnten, bekannten Fluidkühlvorrichtungen unter Beibehalten ihrer Vorteile im Hinblick auf ihren kompakten Aufbau dahingehend weiter zu verbessern, dass ein Verbraucher des hydraulischen Kreises kontinuierlich mit Fluid in der benötigten Menge, vorzugsweise in gefilterter Form, versorgt ist und dass Kavitationserscheinungen im hydraulischen Kreis vermieden sind. Eine dahingehende Aufgabe löst eine Fluidkühlvorrichtung mit den Merkmalen des Patentanspruches 1 in seiner Gesamtheit.

Dadurch, dass gemäß dem kennzeichnenden Teil des Patentanspruches 1 in Fluidrichtung zum Verbraucher ein weiteres Filterelement als Teil der Nachsaugeinrichtung vorhanden ist, die derart das Nachsaugventil mit einem vorgebbaren Öffnungsdruck und, durch den direkten Anschluss der Wärmetauschereinrichtung an die Unterseite der Tankeinrichtung, eine mit einer Baulänge von 200 mm oder weniger kurz gehaltene Nachsaugleitung für das Fluid aufweist, dass der Nachsaugdruck optimal minimiert ist, um einen ungewollten Austritt von fluidgebundenem Gas, wie Luft, zumindest innerhalb der Nachsaugeinrichtung zu vermeiden, und dass Filterelemente in konzentrischer Hintereinanderanordnung bezogen auf die Längsachse des Filtergehäuses als Teil der Filtereinrichtung in dem Filtergehäuse aufgenommen sind, das auch mindestens ein Nachsaug-, Vorspann- und Bypassventil aufnimmt, hat dies gegenüber dem genannten Stand der Technik den Vorteil, dass es nicht zu der beschriebenen "weichen" Ölsäule kommen kann, was dem störungsfreien Betrieb des Verbrauchers zugute kommt. Auch sind dergestalt materialschädigende Kavitationserscheinungen vermieden, die regelmäßig entstehen, wenn es in Fluiden zur Hohlraumbildung kommt, was insbesondere dann der Fall ist, wenn der örtliche, statische Druck in einer Flüssigkeit unter einen kritischen Grenzwert absinkt, der in der Regel etwa gleich groß ist wie der Dampfdruck der Flüssigkeit. Da mithin bei der erfindungsgemäßen Lösung trotz des minimierten Nachsaugdruckes die zum Verbraucher führende Ölsäule ein starres Versorgungssystem ausbildet, ist energetischen Verlusten wirksam begegnet, was wiederum den Energieeintrag, insbesondere für den Antrieb der Speisepumpe, minimieren hilft. Insoweit lassen sich insbesondere im Rahmen von Baumaschinen relevante Treibstoffersparnisse erzielen.

Dank der Nachsaugeinrichtung ist im Bedarfsfall fehlendes Fluid an die Saugseite des Verbrauchers weitergeleitet, so dass sichergestellt ist, dass die von der Vorrichtung kommende Rücklaufmenge an Fluid dem hydraulischen Kreis, insbesondere in Form der Arbeitshydraulik vollumfänglich zugeführt ist. Bekommt aus irgendwelchen Gründen der hydraulische Verbraucher, dem regelmäßig eine Speisepumpe vorgeschaltet ist, nicht die benötigte Rücklaufmenge zugeführt, ermöglicht die Nachsaugeinrichtung, dass unabhängig von dieser Hauptversorgung in einer Art Nebenversorgung die Speisepumpe nebst dem angeschlossenen hydraulischen Verbraucher in vollem Umfang die benötigte Fluidmenge erhält, so dass auch insoweit ein störungsfreier Betrieb realisiert ist.

Die Fluidkühlvorrichtung ist vorzugsweise mit ihrer Wärmetauscher- und Filtereinrichtung derart konzipiert, dass der hydraulische Verbraucher sowohl gekühltes als auch gefiltertes Fluid erhält. Kommt es jedoch zu Störungen an den genannten Einrichtungen, ermöglicht die Fluidkühlvorrichtung eine Art Bypassversorgung des Verbrauchers, die auch den sog. Kaltstartvorgang mit einbezieht. Im Regelfall ist jedoch eine Vollstrom-Rücklauffiltration für den Verbraucher vorgesehen.

Vorzugsweise ist der Nachsaugeinrichtung ein Vorspannventil zugeordnet, das auf einen Standarddruck, beispielsweise 0,5 bar, eingestellt ist und insoweit sicherstellt, dass die von der Speisepumpe des Verbrauchers, beispielsweise in Form eines hydrostatischen Fahrantriebes, benötigte Fluidmenge der gefilterten Rücklaufmenge entnommen werden kann, um dergestalt die erwünschte Vollstrom-Saugfiltration sicherstellen zu können. Treten überschüssige Mengen mit entsprechendem Druckanstieg am Ausgang der Filtereinrichtung auf, können diese über das genannte Vorspannventil gegen den Umgebungsdruck eines Tanks abgelassen werden, so dass im Sinne einer Druckbegrenzung keine unzulässig hohen Drücke in der Rücklaufleitung für den Verbraucher auftreten können. Insoweit ist auch ein Schutz von Dichteinrichtungen, wie Wellendichtringen, vor allem beim Kaltstart über die Fluidkühlvorrichtung erreicht.

Bei einer weiteren besonders bevorzugten Ausführungsform der erfindungsgemäßen Fluidkühlvorrichtung ist vorgesehen, dass diese eine Antriebseinrichtung aufweist, die zur Erzeugung eines Luftstroms eine Luft-Strömungseinrichtung betätigt sowie eine Tankeinrichtung zur Bevorratung des Fluids hat, die einen Durchtrittsraum für den Luftstrom umfaßt, der zumindest teilweise die Luft-Strömungseinrichtung aufnimmt. Durch die dahingehende Ausgestaltung ist eine kompakte Paketlösung geschaffen, bei der eine Wärmetauschereinrichtung als Kühler ausgebildet auch mehrere Kühlerkreise beinhalten kann.

Auch ist hierdurch erreicht, dass ein Teil der Nachsaugleitung unter Einhaltung der kurzen Baulänge zwischen Tankeinrichtung und im Filtergehäuse aufgenommenem Nachsaugventil angeordnet werden kann, da Tank- und Filtereinrichtung in unmittelbarer Nachbarschaft zueinander stehen.

Bei einer weiteren bevorzugten Ausführungsform der erfindungsgemäßen Fluidkühlvorrichtung ist vorgesehen, dass an der Wärmetauschereinrichtung als selbständiges Bauteil ein Halteteil für die Antriebseinrichtung vorgesehen ist und dass die an die Wärmetauschereinrichtung sich anschließende Tankeinrichtung mit ihrem Durchtrittsraum zumindest teilweise die Halterung mit der Antriebseinheit aufnimmt. Hierdurch ergibt sich eine Position des Antriebsmotors der Antriebseinrichtung zwischen der Kühleinrichtung und einem Lüfter der Luft-Strömungseinrichtung, was zu einem robusten Motorhalterungsdesign führt, so dass insoweit ein vibrationsarmer Betrieb erreicht ist, was sich wiederum günstig auf das Nachsaugverhalten der Nachsaugeinrichtung auswirkt.

Weitere vorteilhafte Ausführungsformen der erfindungsgemäßen Fluidkühlvorrichtung sind Gegenstand der sonstigen Unteransprüche.

Im Folgenden wird die erfindungsgemäße Fluidkühlvorrichtung anhand eines Ausführungsbeispieles nach den Zeichnungen näher erläutert. Dabei zeigen in prinzipieller und nicht maßstäblicher Darstellung die
- Fig. 1 in der Art eines hydraulischen Schaltplanes den grundsätzlichen Aufbau der Fluidkühlvorrichtung;
- Fig. 2 in perspektivischer Draufsicht die Vorderansicht der Fluidkühlvorrichtung nach der Fig. 1;
- Fig. 3 in der Art einer Explosionszeichnung Baukomponenten der Fluidkühlvorrichtung von einer gegenüber der Fig. 2 hinteren Ansichtsseite;
- Fig. 4 einen Ausschnitt eines Teils der Baukomponente nach der Fig. 3;
- Fig. 5 und 6 in der Art einer Längsschnittdarstellung das obere und untere Ende einer Filtereinrichtung gemäß der Gesamtdarstellung nach der Fig. 7, und
- Fig. 7 den grundlegenden Aufbau der Filtereinrichtung mit Nachsaugeinrichtung.

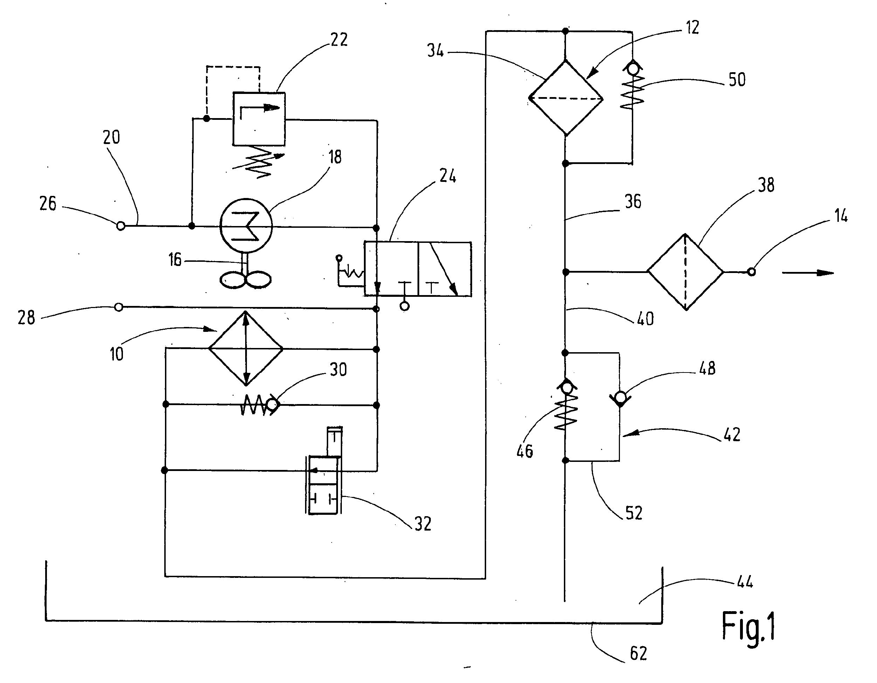

Die hydraulische Schaltplandarstellung nach der Fig. 1 zeigt eine als Ganzes mit 10 bezeichnete Wärmetauschereinrichtung zur Kühlung mindestens eines Fluids, insbesondere in Form von Hydrauliköl. Des weiteren weist die Fluidkühlvorrichtung eine als Ganzes mit 12 bezeichnete Filtereinrichtung zum Filtern des Fluids auf, das an einen Verbraucher 14 weiterleitbar ist. Der Verbraucher 14 soll im vorliegenden Fall aus einem hydrostatischen Antrieb eines Fahrzeuges, insbesondere in Form einer Baumaschine, bestehen, der in üblicher Weise über eine nicht näher dargestellte Speisepumpe oder eine Gruppe eine Speisepumpen mit Fluid versorgbar ist. Des weiteren weist die Fluidkühlvorrichtung eine Luftströmungseinrichtung 16 auf, in der Art eines Lüfter- oder Fangebläses. Der Antrieb der Strömungseinrichtung erfolgt über eine Antriebseinrichtung 18, im vorliegenden Fall gebildet aus einem hydraulisch antreibbaren Motor. Anstelle des Hydromotors könnte aber auch ein elektrischer Antriebsmotor (nicht dargestellt) treten. Parallel zum Hydromotor 18 verlaufend ist in den hydraulischen Kreis 20 ein Druckbegrenzungsventil 22 geschaltet, das den Motor vor Überlast schützt. In Fluidströmungsrichtung, dem Motor nachgeschaltet, ist ein von Hand betätigbares 3/2-Wegeschaltventil 24 vorgesehen, das in seiner gezeigten, durchlässigen Stellung den Fluidkreis von Motor 18 zur Wärmetauschereinrichtung 10 herstellt. In der anderen Schaltstellung sperrt das Ventil 24 den hydraulischen Kreis in Richtung der Wärmetauschereinrichtung 10 ab, was die Möglichkeit eröffnet, Wartungsarbeiten vorzunehmen, beispielsweise verbrauchte Filterelemente der Filtereinrichtung 12 zu tauschen, ohne von nachströmendem Fluid im Kreis 20 beeinträchtigt zu sein.

Wie sich weiter aus der Fig. 1 ergibt, ist die Eingangsseite des Hydromotors 18 über eine erste Anschlussstelle 26 an den hydraulischen Kreis 20 mit dem genannten Verbraucher 14 angeschlossen, wobei insoweit ein Konstantanteil an Fluidmenge für einen störungsfreien Betrieb des Motors 18 diesem direkt zugeführt wird. Über eine weitere zweite Anschlussstelle 28 wird insoweit im Nebenzweig in Fluidrichtung hinter dem Schaltventil 24 die Restfluidmenge, gegebenenfalls mit variabler Volumenmenge an die Wärmetauschereinrichtung 10 weitergegeben. Letztere ist über ein übliches Rückschlagventil 30 gegen Überlast abgesichert. In weiterer Parallelschaltung zum Rückschlagventil 30 und zur Wärmetauschereinrichtung 10 ist in den hydraulisch Kreis 20 ein temperaturgesteuertes 2/2-Wegeproportionalventil 32 geschaltet, das mit wachsender Fluidtemperatur in die gesperrte Stellung übergeht um dergestalt das erwärmte Fluid der Wärmetauschereinrichtung 10 ausschließlich zuzuführen. Da insbesondere in der Kaltstartphase das zu transportierende Fluid zähflüssig ist und insoweit in kaltem Zustand auch nicht gekühlt zu werden braucht, kann man durch entsprechende Öffnung des Proportionalventiles 32 in Richtung der Durchlassstellung die Wärmetauschereinrichtung 10 entlasten.

In jedem Fall gelangt eine vorgebbare Rücklaufmenge an die Filtereinrichtung 12 mit ihrem ersten Filterelement 34. Das insoweit filtrierte und mithin gereinigte Fluid gelangt dann über die Abgabeleitung 36 an ein zweites Filterelement 38, das vor dem Verbraucher 14 mit der Speisepumpe angeordnet ist. Im weiteren Nebenzweig 40 mündet dann die Abgabeleitung 36 in eine als Ganzes mit 42 bezeichnete Nachsaugeinrichtung. Die Nachsaugeinrichtung weist im Nebenzweig 40 zur Tankseite 44 hin orientiert ein Vorspannventil 46 auf, das zur Tankseite 44 in seine Öffnungsstellung übergeht und in der gegenläufigen Richtung seine in der Fig. 1 gezeigte Schließstellung einnimmt. Das dahingehende Vorspannventil besteht vorzugsweise aus einem federbelasteten Rückschlagventil. Parallel zum Vorspannventil 46 angeordnet, mit entsprechender Fluidanbindung vor und hinter dem Vorspannventil in den Nebenzweig 40, ist in den fluidischen Kreis 20 ein Nachsaugventil 48 geschaltet, das in der Art eines Rückschlagventiles ausgebildet zur Tankseite 44 hin schließt und in gegenläufiger Richtung zum hydraulischen Verbraucher 14 hin die Öffnungsstellung einnimmt. Während das Vorspannventil 46 einen Vorspanndruck von beispielsweise 0,5 bar in charakteristischer Weise aufweist, öffnet das Nachsaugventil 48 unmittelbar, sofern die Speisepumpe des Verbrauchers 14 von der Tankseite 44 her Vorratsfluid nachfordert, was insbesondere der Fall ist, wenn über das Filterelement 34 nicht genug Fluid nachströmt.

Des weiteren weist das erste Filterelement 34 in Parallelschaltung ein Bypassventil 50 auf, das als federbelastetes Rückschlagventil ausgebildet zur Tankseite 44 hin öffnet und im übrigen auf einen Bypassöffnungsdruck von beispielsweise 2 bar eingestellt ist. Ist das Filterelement 34 der Filtereinrichtung 12 verschmutzt und insoweit verblockt, kann die Fluidmenge bei geöffnetem Bypassventil 50 zu dem hydraulischen Verbraucher 14 gelangen, wobei im dahingehenden Bypassfall die Filtration der Rücklaufmenge an den Verbraucher 14 über das zweite Filterelement 38 erfolgt.

Der Vorspanndruck von beispielsweise 0,5 bar am Vorspannventil 46 stellt sicher, dass insoweit vorgespanntes Fluid von der Filtereinrichtung 12 kommend, dem hydraulischen Verbraucher 14 zur Verfügung steht. Steigt der Vorspanndruck der Fluidrücklaufmenge an, die vom ersten Filterelement 34 in die Abgabeleitung 36 sowie den Nebenzweig 40 gelangt, öffnet das Vorspannventil 46 zur Tankseite hin und entspannt insoweit die Rücklaufmenge bis wieder der für den Verbraucher 14 vorgesehene Nominaldruck im vorliegenden Fall von 0,5 bar erreicht ist. Fließt über die erste und zweite Anschlussstelle 26, 28 zu wenig Fluid in den hydraulischen Kreis 20 nach, erlaubt die Saugseite der Speisepumpe für den Verbraucher 14 ein Nachsaugen aus einer Tankvorratsmenge in dem das Nachsaugventil 48 der Nachsaugeinrichtung 42 in Richtung des Verbrauchers 14 öffnet und insoweit das Nachfließen des Fluidmediums sicherstellt. Insoweit kommt es beim Betrieb des Verbrauchers 14 zu keiner Zeit zu einer Unterversorgung an Verbraucherfluid, was für den Betrieb hydrostatischer Fahrantriebe bereits aus Sicherheitsgründen eine Notwendigkeit darstellt.

Liegt nun, wie im Stand der Technik aufgezeigt, beispielsweise der Vorratstank mit seiner Tankseite 44 weit entfernt zum Verbraucher 14 innerhalb des Fahrzeuges, verlängert sich insoweit auch die Nachsaugleitung 52, in die das Nachsaugventil 48 geschaltet ist. Im Hinblick auf diese dann relativ lange Wegstrecke ist eine erhöhte Saugleistung von Seiten der Speisepumpe notwendig um den Verbraucher 14 hinreichend versorgen zu können. Dies führt dann aber letztlich zu einem erhöhten Nachsaugdruck, was im ungünstigen Fall dazu führt, dass die im Fluid gebundene Gasmenge, insbesondere in Form von Luft in Hydrauliköl, zwangsweise austritt und in die Nachsaugleitung 52 der Nachsaugeinrichtung 42 gelangt. Dieser Gas- oder Luftaustritt führt dann letztendlich zu sogenannten "weichen" Ölsäulen, so dass die vor dem Verbraucher 14 angeschlossene Speisepumpe nicht nur durch die Luftaustragsmenge in ihrer Funktion beeinträchtigt ist, sondern auch dadurch, dass der nachfließenden Ölsäule die für einen sicheren Betrieb notwendige Steifigkeit fehlt, was zu energetisch ungünstigen Betriebsverlusten der Gesamtvorrichtung führen kann. Auch ist nicht auszuschließen, dass im Hinblick auf den Gas- oder Luftaustrag es zu Kavitationserscheinungen, zumindest bei der Speisepumpe, kommt, was diese schädigt.

Neben dem erfindungsgemäßen Zweck, eine Fluidkühlvorrichtung zur Verfügung zu stellen, die bei Betrieb des Verbrauchers 14 in jedem Fall sicherstellt, dass dieser seine benötigte Fluidmenge erhält, erfüllt die erfindungsgemäße Fluidkühlvorrichtung den weiteren Zweck, den in Rede stehenden Nachsaugdruck zu minimieren um so die in der Nachsaugleitung 52 befindliche Ölmenge systemsteif zu halten und den ungewollten Gausaustritt des gebundenen Gases aus dem Öl zu vermeiden. Das mit einer Fluidkühlvorrichtung in Kompaktbauweise den dahingehenden Aufgabestellungen Genüge getan wird, ist für einen Durchschnittsfachmann auf dem Gebiet der Fluidtechnik überraschend.

Um dem dahingehenden Problem zu begegnen, ist also die Nachsaugeinrichtung 42 derart mit dem Nachsaugventil 48 mit dem vorgebbaren geringen Öffnungsdruck und eine in der Baulänge kurz gehaltene Nachsaugleitung 52 für das Fluid versehen, das der Nachsaugdruck optimal minimiert ist um den ungewollten Austritt von fluidgebundenem Gas, wie Luft, innerhalb der Nachsaugeinrichtung 42 zu vermeiden, sowie bezogen auf die nachgeschalteten Verbraucher 14 nebst Speisepumpeneinrichtung.

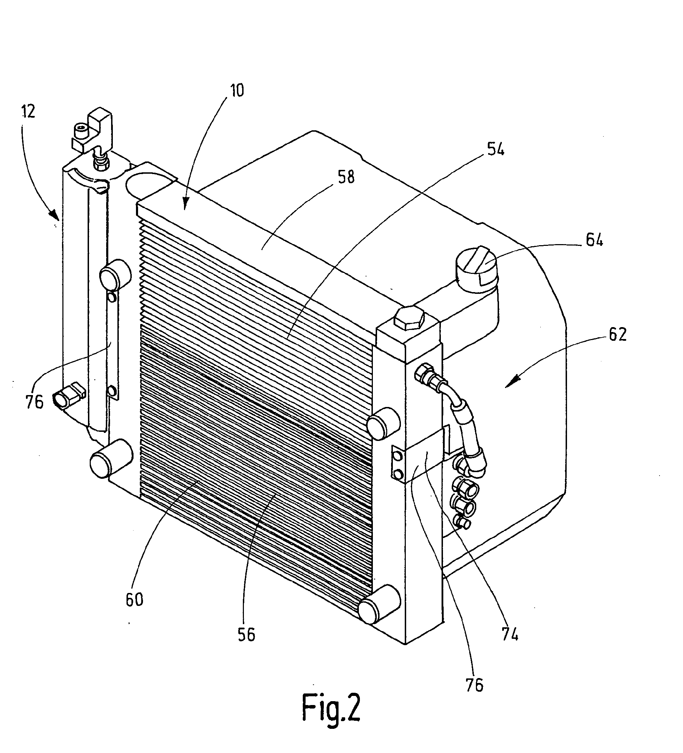

Die Fig. 2 zeigt nun in perspektivischer Draufsicht die Fluidkühlvorrichtung in der baulichen Realisierung, die insoweit den hydraulischen Schaltplan nach der Fig. 1 realisiert. Die Fluidkühlvorrichtung gemäß der Darstellung nach der Fig. 2 ist von der Wärmetauschereinrichtung 10 her gegenüber der Schaltplandarstellung nach der Fig. 1 noch insoweit optimiert, als der obere Bereich 54 für die Kühlung von Öl vorgesehen ist, wohingegen der untere Bereich 56 in einem separaten nicht dargestellten Kühlkreislauf der zusätzlichen Kühlung von Wasser dient. Die Wärmetauschereinrichtung 10 ist in der Art eines Rahmengestells 58 ausgebildet, wobei der Rahmen zwischen sich in an sich bekannter Weise die Lamellen 60 als Kühleinheit aufnimmt, die zur Realisierung eines Luftdurchsatzes auf Abstand zueinander gehalten sind. Der dahingehende Aufbau eines Plattenkühlers ist im Stand der Technik üblich, so dass an dieser Stelle hierauf nicht mehr näher eingegangen wird. In Blickrichtung auf die Fig. 2 gesehen, schließt sich hinter der Wärmetauschereinrichtung 10 eine als Ganzes mit 62 bezeichnete Tankeinrichtung an, die gemäß der Darstellung nach der Fig. 1 die Tankseite 44 mit beinhaltet. Die dahingehende Tankeinrichtung 62 ist bevorzugt als formoptimiertes Hohlkunststoffbauteil ausgestaltet und weist an ihrer Oberseite eine Nachfülleinrichtung 64 für Fluid auf.

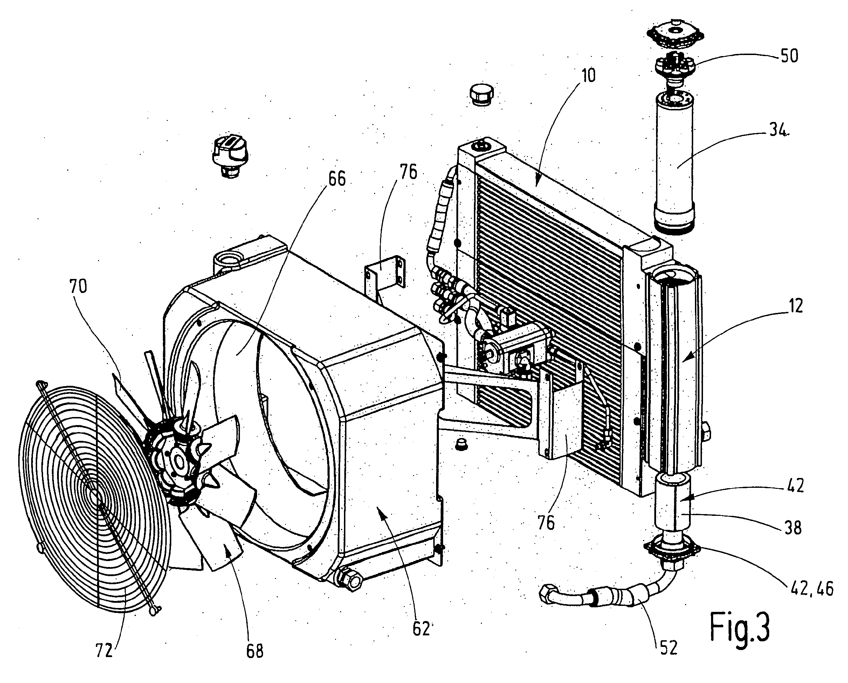

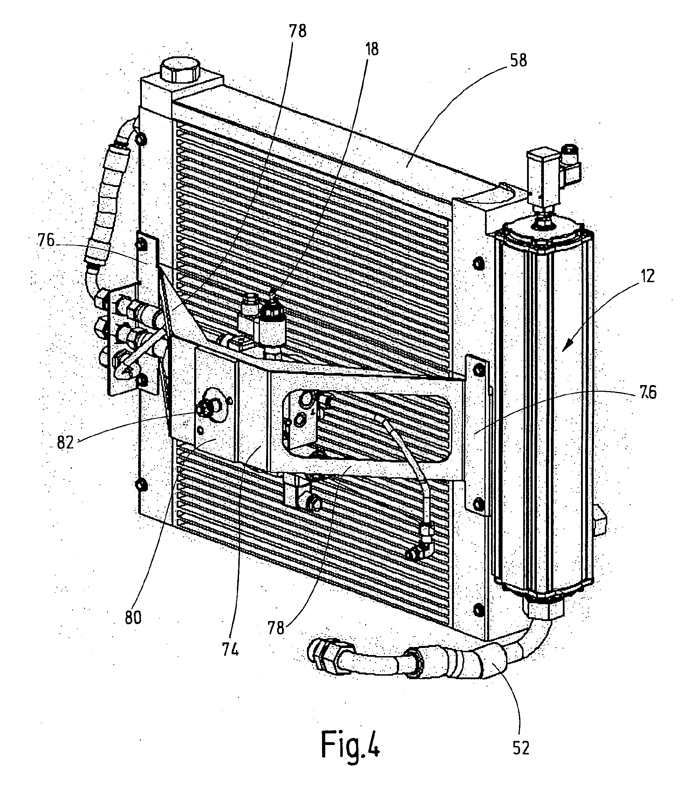

Gemäß der Explosionszeichnung nach der Fig. 3 umfasst die Tankeinrichtung 62 rahmenartig einen Durchtrittsraum 66, der der Aufnahme einer als Ganzes mit 68 bezeichneten Luft-Strömungseinrichtung dient, mit einem antreibbaren Lüfter oder Fan 70, der nach außen hin von einem Schutzgitter 72 abgedeckt ist. Wie insbesondere der Ausschnitt nach der Fig. 4 zeigt, ist ein bügelförmiges Halteteil 74 vorgesehen, das als Blechformteil ausgebildet mit seinen Randstegen 76 klammerartig die einander gegenüberliegenden Endholme des Rahmenaufbaues 58 der Wärmetauschereinrichtung 10 übergreift und dergestalt dort festgelegt ist. Die Randstege 76 münden in schräg verlaufende Haltestege 78 aus, die zwischen sich eine Aufnahmeplatte 80 begrenzen, die mittig einen Durchtritt für die Antriebswelle 82 des Lüfterrades oder Fans 70 aufweist. An der rückwärtigen Seite der Aufnahmeplatte 80 und mithin zwischen Halteteil 74 und Stirnseite des Lamellenkühlers ist der Hydromotor 18 angeordnet, wobei zu einem Block zusammengefaßt auch die Ventile 22, 24, 30 und 32 an dieser Stelle durch das Halteteil 74 gelagert und aufgenommen sein können. Insoweit nimmt der Durchtrittsraum 66 der Tankeinrichtung 62 auch das Halteteil 74 mit den genannten Komponenten auf, wobei die freie Stirnseite der Tankeinrichtung 62 bündig am Rahmenkasten 58 der Wärmetauschereinrichtung 10 anliegt und mit dieser fest verbunden ist.

Durch den derartigen Aufbau ergibt sich ein besonders steifes Gesamtsystem für die Fluidkühlvorrichtung, so dass ein vibrationsarmer Betriebsablauf gewährleistet ist, was sich auch günstig auf den Betrieb der Nachsaugeinrichtung 42 auswirkt. In den Fig. 3 und 4 ist insbesondere noch die Nachsaugleitung 52 wiedergegeben und es wird deutlich, dass durch den direkten Anschluß an der Unterseite der Tankeinrichtung 62 an die Wärmetauschereinrichtung 10 der Fluidweg für die Nachsaugleitung 52 von der Baulänge her sehr kurz ausfällt, wobei hier kurze Baulängen für die Nachsaugleitung 52 durchaus in der Größenordnung von 200mm und weniger erreichbar sind, was dergestalt im Stand der Technik keine Entsprechung hat.

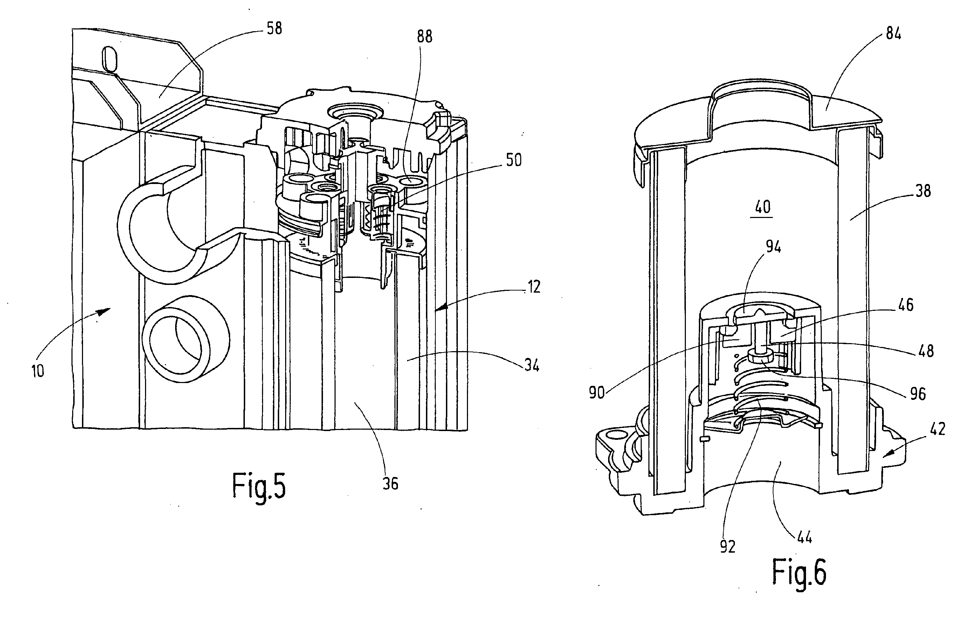

Im Folgenden wird gemäß den Darstellungen nach den Fig. 5 bis 7 die Filtereinrichtung 12 nebst Nachsaugeinrichtung 42 näher beschrieben. Die beiden eingesetzten Filterelemente 34, 38 sind zur Längsachse der Filtereinrichtung 12 koaxial übereinander angeordnet und durch eine Zwischenplatte 84 voneinander separiert. Die Filterelemente 34, 38 sind in einem fluiddichten Gehäuse 86 aufgenommen, das entsprechende Fluidein- und - auslässe für den Fluidtransport gemäß dem hydraulischen Schaltplan nach der Fig. 1 aufweist. Da eine dahingehende Anschlußtechnik üblich ist, wird an dieser Stelle hierauf nicht mehr näher eingegangen.

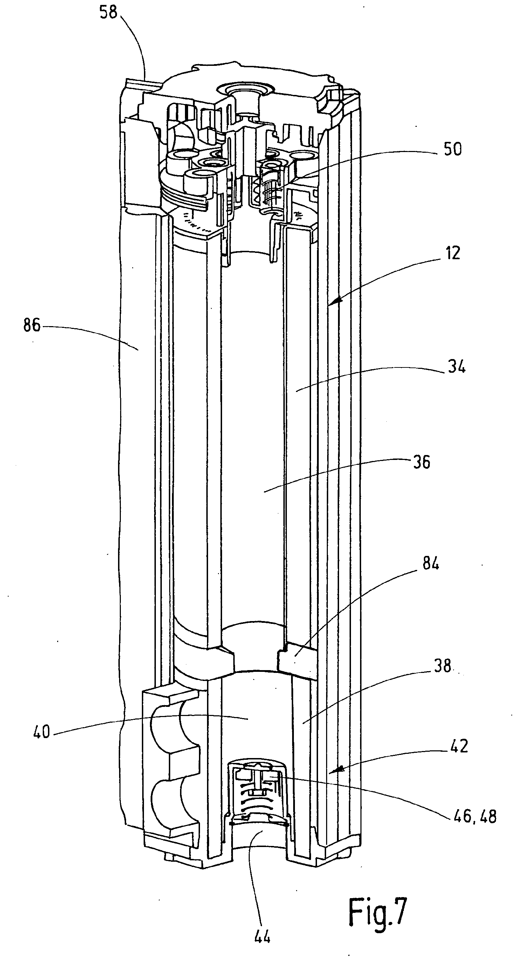

Die Fig. 5 und 6 geben einen jeweils vergrößerten Ausschnitt wieder für den oberen Bereich nach der Fig. 7 bzw. den unteren Bereich derselben Fig.. Wie insbesondere die Fig. 5 weiter zeigt, ist am oberen Ende des Filterelementes 34 das Bypassventil 50 angeordnet, das aus einzelnen federbelasteten Rückschlagventilen aufgebaut ist. Benachbart zu den gezeigten Rückschlagventilen sind Durchlässe 88 vorhanden, die den Fluidtransport zum Filterelement 34 sicherstellen, wobei das dahingehende Filterelement 34 von außen nach innen durchströmt wird. Ist das Filterelement 34 durch Verschmutzungen verblockt, öffnet das Bypassventil 50 und die Fluidmenge gelangt als Rücklauffluid unfiltriert in die Abgabeleitung 36 und von dieser in den Nebenzweig 40, so dass das weitere zweite Filterelement 38 von innen nach außen durchströmt, die Abfiltrierung von Verschmutzungen vornimmt. Das im Bypassfall dergestalt von dem zweiten Filterelement 38 gereinigte Fluid gelangt dann zu dem Verbraucher 14 bzw. seiner vorgeschalteten Speisepumpe.

Die am unteren Ende der Filtereinrichtung 12 konzipierte Nachsaugeinrichtung 42 weist in Blickrichtung auf die Fig. 6 gesehen, am unteren Ende an einer absatzartigen Vorkrakung in den Nebenzweig 40 hinein das Vorspannventil 46 sowie das Nachsaugventil 48 auf. Steigt der Druck im Nebenzweig 40 über den Druck des Vorspannventiles 46 an, öffnet der Ringventilkörper 90 entgegen der Vorspannung der Feder 92 und das üblicherweise vom ersten Filterelement 34 gereinigte Fluid tritt über die Tankseite 44 in die Tankeinrichtung 62 ein. Kommt es zu einem Nachsaugvorgang am Verbraucher 14, weil die Fluidmenge mit vorgebbarem Druck in der Abgabeleitung 36 der Filtereinrichtung 12 fehlt, wird in Blickrichtung auf die Fig. 6 das Tellerteil 94 nach oben hin vom Ringventilträger 90 abgehoben, der insoweit nach oben hin von der Vorkrakung im Inneren des Ventils begrenzt ist und nachgesaugtes Fluid kann von der Tankseite 44 in den Nebenzweig 40 gelangen und von dort filtriert durch das zweite Filterelement 38 von der Speisepumpe des Verbrauchers 14 angesaugt werden. Damit das Ventil 48 nicht in den Nebenzweig 40 gesogen werden kann, weist dieses an seiner Unterseite eine schraubenkopfförmige Verbreiterung 96 auf, die auf Anschlag geht zur unteren Stirnseite des Ringventilträgers 90. Im dahingehenden Nachsaugfall bleibt mithin das Vorspannventil 46 in seiner geschlossenen Stellung.

Von der Drucköffnungssituation her öffnet das Nachsaugventil 48 im Nachsaugfall nahezu bei Umgebungsdruck, das Vorspannventil 46 bei ca. 0,5 bar und das Bypassventil 50 für das Filterelement 34 bei ca. 2 bar. Die dahingehenden Druckwerte sind nur exemplarisch und können andere Werte annehmen. Charakteristisch ist jedoch, dass der Öffnungswert für das Bypassventil 50 größer ist als für das Vorspannventil 46 und dieses wiederum einen höheren Öffnungsdruck aufweist als das Nachsaugventil 48. Aufgrund der konzentrischen Filterelementanordnung 34, 38 läßt sich die Filtereinrichtung 12 kombiniert mit der Nachsaugeinrichtung 42 platzsparend innerhalb des Gehäuses 86 unterbringen.

Die vorliegende Lösung ist nicht auf die Anwendung bei hydrostatischen Antrieben mit Speisepumpe eingeschränkt, sondern kann überall dort angewendet werden, wo ein hydraulischer Verbraucher im Nachsaugtakt mit einem Fluid im Bedarfsfall zu versorgen ist. Auch kann zwischen Filterelement 34 der Filtereinrichtung 12 und der Wärmetauschereinrichtung 10 ein fluidführender Anschluß einer zusätzlichen Arbeitshydraulik (nicht dargestellt) in den hydraulischen Kreis 20 münden, wobei die Temperatur dieser zusätzlichen Arbeitshydraulik weitaus geringer ist als die Temperatur des hydrostatischen Fahrantriebes als Verbraucher 14. Vorzugsweise erfolgt der Fluidanschluß der zusätzlichen Arbeitshydraulik an der Abzweigstelle zwischen Filterelement 34 und Bypassventil 50.

## Patentansprüche

1. Fluidkühlvorrichtung mit mindestens einer Wärmetauschereinrichtung (10) zur Kühlung mindestens eines Fluids und mit mindestens einer Filtereinrichtung (12) zum Filtern des Fluids, das an einen Verbraucher (14) weiterleitbar ist und mit einem Filtergehäuse (86), wobei die Vorrichtung eine Nachsaugeinrichtung (42) mit einem Nachsaugventil (48) aufweist, die im Bedarfsfall fehlendes Fluid an die Saugseite des Verbrauchers (14) weiterleitet, wobei die Filtereinrichtung (12) mindestens ein Filterelement (34) aufweist, das eine Rücklaufmenge an Fluid von der Wärmetauschereinrichtung (10) kommend gefiltert an den Verbraucher (14) weiterleitet und dass ein Vorspannventil (46) der Nachsaugeinrichtung (42) sicherstellt, dass die vom Verbraucher (14) benötigte Fluidmenge, vorzugsweise als gefilterte Rücklaufmenge, voll zur Verfügung steht, **dadurch gekennzeichnet, dass** in Fluidrichtung zum Verbraucher (14) ein weiteres Filterelement (38) als Teil der Nachsaugeinrichtung (42) vorhanden ist, die derart das Nachsaugventil (48) mit einem vorgebbaren Öffnungsdruck und, durch den direkten Anschluss der Wärmetauschereinrichtung (10) an die Unterseite der Tankeinrichtung (62), eine mit einer Baulänge von 200 mm oder weniger kurz gehaltene Nachsaugleitung (52) für das Fluid aufweist, dass der Nachsaugdruck optimal minimiert ist, um einen ungewollten Austritt von fluidgebundenem Gas, wie Luft, zumindest innerhalb der Nachsaugeinrichtung (42) zu vermeiden, und dass Filterelemente (34, 38) in konzentrischer Hintereinanderanordnung bezogen auf die Längsachse des Filtergehäuses (86) als Teil der Filtereinrichtung (12) in dem Filtergehäuse (86) aufgenommen sind, das auch mindestens ein Nachsaug-, Vorspann- und Bypassventil (48, 46, 50) aufnimmt.

2. Fluidkühlvorrichtung nach Anspruch 1, **dadurch gekennzeichnet, dass** in entgegengesetzter Öffnungsrichtung zum Vorspannventil (46) und parallel zu diesem geschaltet das Nachsaugventil (48) angeordnet ist, das in Fluidrichtung des Verbrauchers (14) öffnet.

3. Fluidkühlvorrichtung nach Anspruch 1 oder 2, **dadurch gekennzeichnet, dass** parallel zum Filterelement (34) für das Filtern der Rücklaufmenge ein Bypassventil (50) geschaltet ist, das in Fluidrichtung des Verbrauchers (14) öffnet.

4. Fluidkühlvorrichtung nach einem der Ansprüche 1 bis 3, **dadurch gekennzeichnet, dass** diese eine Antriebseinrichtung (18) aufweist, die zur Erzeugung eines Luftstromes eine Luft-Strömungseinrichtung (16) betätigt sowie eine Tankeinrichtung (62) zur Bevorratung des Fluids hat, die einen Durchtrittsraum (66) für den Luftstrom umfaßt, der zumindest teilweise die Luft-Strömungseinrichtung (16) aufnimmt.

5. Fluidkühlvorrichtung nach Anspruch 4, **dadurch gekennzeichnet, dass** ein Teil der Nachsaugleitung (52) unter Einhaltung der kurzen Baulänge zwischen Tankeinrichtung (62) und im Filtergehäuse (86) aufgenommenem Nachsaugventil (48) verläuft.

6. Fluidkühlvorrichtung nach Anspruch 4 oder 5, **dadurch gekennzeichnet, dass** an der Wärmetauschereinrichtung (10) als selbständiges Bauteil ein Halteteil (74) für die Antriebseinrichtung (18) vorgesehen ist und dass die an die Wärmetauschereinrichtung (10) sich anschließende Tankeinrichtung (62) mit ihrem Durchtrittsraum (66) zumindest teilweise das Halteteil (74) mit der Antriebseinheit (18) aufnimmt.

## Claims

1. A fluid cooling apparatus comprising at least one heat exchanger device (10) for cooling at least one fluid and comprising at least one filter device (12) for filtering the fluid that can be conveyed to a consumer (14), and comprising a filter housing (86), the apparatus having a replenishment device (42) with a replenishment valve (48) that, if necessary, conducts lacking fluid to the intake side of the consumer (14), the filter device (12) having at least one filter element (34) that conveys a return amount of fluid coming from the heat exchanger device (10), filtered, to the consumer (14), and a pre-charge valve (46) of the replenishment device (42) ensuring that the amount of fluid required by the consumer (14), preferably as a filtered return amount, is totally available, **characterised in that** an additional filter element (38) is provided as part of the replenishment device (42) in the fluid direction to the consumer (14), which thus provides the replenishment valve (48) with a pre-definable opening pressure and, by the direct connection of the heat exchanger device (10) to the bottom of the tank device (62), has a replenishment line (52) for the fluid kept short with an installation length of 200 mm or less such that the replenishment pressure is optimally minimised in order to prevent unintentional escape of fluid-bound gas, such as air, at least within the replenishment device (42), and that filter elements (34, 38) are accommodated within the filter housing (86) in a concentric arrangement one behind the other in relation to the longitudinal axis of the filter housing (86) as part of the filter device (12), which filter housing also accommodates at least one replenishment, pre-charge and bypass valve (48, 46, 50).

2. The fluid cooling apparatus according to Claim 1, **characterised in that** in the opposite opening direction to the pre-charge valve (46) and connected parallel to it is the replenishment valve (48) which opens in the fluid direction of the consumer (14).

3. The fluid cooling apparatus according to Claim 1 or 2, **characterised in that** a bypass valve (50) which opens in the fluid direction of the consumer (14) is connected parallel to the filter element (34) for filtering the return amount.

4. The fluid cooling apparatus according to any of Claims 1 to 3, **characterised in that** the latter has a drive device (18) which actuates an air flow device (16) in order to generate an air flow, and a tank device (62) for storage of the fluid, which tank device comprises a passage space (66) for the air flow which accommodates at least in part the air flow device (16).

5. The fluid cooling apparatus according to Claim 4, **characterised in that** part of the replenishment line (52) runs between the tank device (62) and the replenishment valve (48) which is accommodated in the filter housing (86) while maintaining the short overall length.

6. The fluid cooling apparatus according to Claim 4 or 5, **characterised in that** a holding part (74) for the drive device (18) is provided as an independent component on the heat exchanger device (10) and that the tank device (62) which follows the heat exchanger device (10) accommodates, with its passage space (66), at least in part the holding part (74) with the drive unit (18).

## Revendications

1. Installation de refroidissement de fluide comprenant au moins un dispositif (10) à échangeur de chaleur pour le refroidissement d'au moins un fluide et comprenant au moins un dispositif (12) de filtration pour filtrer le fluide, qui peut être acheminé à un utilisateur (14), et comprenant une enveloppe (86) de filtre, l'installation ayant un dispositif (42) de post-aspiration ayant une soupape (48) de post-aspiration et acheminant, en cas de besoin, du fluide manquant vers le côté aspiration de l'utilisateur (14), le dispositif (12) de filtration ayant au moins un élément (34) filtrant, qui achemine vers l'utilisateur (14) une quantité de retour de fluide filtré venant du dispositif (10) à échangeur de chaleur, et en ce qu'une soupape (46) élévatrice de pression du dispositif (42) d'aspiration assure que la quantité de fluide dont a besoin l'utilisateur (14), de préférence sous la forme d'une quantité de retour filtrée, soit entièrement à disposition, **caractérisée en ce que**, dans le sens du fluide allant à l'utilisateur (14), est prévu un autre élément (38) filtrant comme partie du dispositif (42) de post-aspiration, lequel a la soupape (48) de post-aspiration ayant une pression d'ouverture pouvant être prescrite et, par le raccordement direct du dispositif (10) à échangeur de chaleur au côté inférieur du dispositif (62) de cuve, a un conduit (52) de post-aspiration pour le fluide maintenu court, à une longueur inférieure ou égale à 200 mm, de manière à minimiser au mieux la pression de post-aspiration afin d'empêcher une sortie intempestive de gaz liée au fluide, comme de l'air, au moins à l'intérieur du dispositif (42) de post-aspiration, et **en ce que** des éléments (34, 38) filtrant suivant un agencement concentrique l'un derrière l'autre, rapporté à l'axe longitudinal de l'enveloppe (86) du filtre, sont, en tant que partie du dispositif (12) de filtration, reçus dans l'enveloppe (86) du filtre, qui reçoit aussi au moins une soupape (48, 46, 50) de post-aspiration, d'élévation de la pression et de dérivation.

2. Installation de refroidissement de fluide suivant la revendication 1, **caractérisée en ce que** la soupape (48) de post-aspiration est montée suivant un sens d'ouverture contraire par rapport à la soupape (46) élévatrice de pression et parallèlement à celle-ci, la soupape (48) de post-aspiration s'ouvrant dans le sens du fluide de l'utilisateur.

3. Installation de refroidissement de fluide suivant la revendication 1 ou 2, **caractérisée en ce que**, parallèlement à l'élément (34) filtrant, est montée, pour filtrer la quantité de retour, une soupape (50) de dérivation, qui s'ouvre dans le sens du fluide de l'utilisateur (14).

4. Installation de refroidissement de fluide suivant l'une des revendications 1 à 3, caractérisée en qu'elle a un dispositif (18) d'entraînement, qui actionne, pour la production d'un courant d'air, un dispositif (16) d'écoulement d'air et a un dispositif (62) de cuve pour la mise en réserve du fluide, qui comprend un espace (66) de passage du courant d'air, qui reçoit, au moins en partie, le dispositif (16) d'écoulement d'air.

5. Installation de refroidissement de fluide suivant la revendication 4, caractérisée en qu'une partie du conduit (52) de post-aspiration s'étend, en conservant la longueur courte, entre le dispositif (62) de cuve et la soupape (48) de post-aspiration reçue dans l'enveloppe (86) du filtre.

6. Installation de refroidissement de fluide suivant la revendication 1, caractérisée en que, sur le dispositif (10) à échangeur de chaleur est prévue, comme composant indépendant, une partie (74) de maintien du dispositif (18) d'entraînement et en ce que le dispositif (62) de cuve se raccordant au dispositif (10) à échangeur de chaleur reçoit, par son espace (66) de passage, au moins en partie, la partie (74) de maintien avec l'unité (18) d'entraînement.
